# EUROPÄISCHE PATENTSCHRIFT

(11) **EP 2 995 483 B1**
(45) Veröffentlichungstag und Bekanntmachung des Hinweises auf die Patenterteilung: **12.06.2019**
(21) Anmeldenummer: 15001762.2
(22) Anmeldetag: 15.06.2015
(51) Int. Cl.: B60G 7/00, B60G 9/00, B60G 9/02, B60G 21/05

(54) **VIERPUNKTLENKER ZUR ANBINDUNG EINER FAHRZEUGACHSE AN EINEM FAHRZEUGRAHMEN EINES FAHRZEUGS**
FOUR-POINT-ARM FOR CONNECTING A VEHICLE AXLE TO A VEHICLE CHASSIS OF A VEHICLE
BIELLE À QUATRE POINTS DESTINÉE À RELIER UN ESSIEU DE VÉHICULE À UN CHÂSSIS DE VÉHICULE

(30) Priorität: 10.09.2014 DE 102014013428
(43) Veröffentlichungstag der Anmeldung: 16.03.2016
(73) Patentinhaber: MAN Truck & Bus AG, 80995 München (DE)
(72) Erfinder: Hintereder, Jürgen, 80997 München (DE)
(74) Vertreter: v. Bezold & Partner Patentanwälte - PartG mbB

(56) Entgegenhaltungen:
- DE-A1- 19 521 874
- DE-A1- 19 961 425
- DE-A1-102014 207 773
- DE-T2- 60 125 410

## Beschreibung

Die Erfindung betrifft einen Vierpunktlenker zur Anbindung einer Fahrzeugachse an einem Fahrzeugrahmen eines Fahrzeugs, insbesondere eines Nutzfahrzeugs.

Zur Anlenkung einer starren Antriebsachse eines Nutzfahrzeugs werden vielfach Achsaufhängungen eingesetzt, die aus einer Achsführung durch an beiden Fahrzeugseiten angeordnete Längslenker, die einerseits an der Fahrzeugachse und andererseits am Fahrzeugaufbau angelenkt sind, und einem in der Fahrzeugmitte mit einem Zentralgelenk an der Fahrzeugachse verankerten und mit den Enden seiner beiden Armen andererseits am Fahrzeugaufbau angelenkten Dreieckslenker gebildet werden. Zur Stabilisierung ist ferner ein im Allgemeinen U-förmiger Stabilisatorstab vorgesehen.

Nachteilig an diesen bekannten Achsaufhängungen sind der Bauraumbedarf für die Anordnung des Stabilisatorstabes, das hohe Gewicht und die kostenaufwändige Gestaltung der Achsaufhängung.

Eine vereinfachte Achsaufhängung für Starrachsen ist aus der DE 195 21 874 A1 bekannt. Die vorgeschlagene Achsaufhängung weist einen Vierpunktlenker auf, auch als X-Lenker bezeichnet, bestehend aus zwei stabilen Gelenkarmen, die durch ein Flächentragwerk fest miteinander verbunden sind, wobei Letzteres verwindbar mit definierter Kennlinie der Verwindung ausgeführt ist.

Der Vierpunktlenker übernimmt die Achsführung in Längs- und Querrichtung und gleichzeitig die Rollstabilisierung (Wankstabilisierung) der Achse. Vierpunktlenker sind aus dem Stand der Technik in unterschiedlichen Ausführungen bekannt und ermöglichen eine Bauteil- und Materialkostenreduktion sowie eine Reduktion des benötigten Bauraums, da kein gesonderter Bauraum für die Lagerung eines Stabilisatorstabs mehr erforderlich ist.

Nachteilig an dem in der DE 195 21 874 A1 vorgeschlagenen Vierpunktlenker ist, dass das Einbringen der Streben in das Flächentragwerk zur Festlegung der Stabilisierungseigenschaften des Lenkers fertigungstechnisch aufwändig ist und vergleichsweise hohe Kosten verursacht.

Eine weitere Achsaufhängung für Starrachsen ist aus der DE 10 2014 207 773 A1 bekannt.

Es ist somit eine Aufgabe der Erfindung, einen verbesserten Vierpunktlenker bereitzustellen, mit dem Nachteile herkömmlicher Vierpunktlenker vermieden werden können. Der Erfindung liegt insbesondere die Aufgabe zugrunde, einen Vierpunktlenker zur Längsführung, Querführung und Rollstabilisierung bereitzustellen, der fertigungstechnisch einfach herzustellen ist und dessen Rollstabilisierungseigenschaften sich zielgenau festlegen und optimieren lassen.

Diese Aufgaben werden durch einen Vierpunktlenker mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Vierpunktlenker zur Anbindung einer Fahrzeugachse an einem Fahrzeugrahmen eines Fahrzeugs, insbesondere eines Nutzfahrzeugs, vorgeschlagen, der zwei Längslenker aufweist, die durch einen Zentralbereich miteinander verbunden sind. Die Längslenker stellen stabile Gelenkarme dar. Gemäß allgemeinen Gesichtspunkten der Erfindung weist der Zentralbereich zwei parallele Platten auf, wobei auf mindestens einer Platte ein Aussteifungselement befestigt ist. Der Zentralbereich ist verwindbar und dient somit nicht nur zur Querführung, sondern bildet auch eine Stabilisierungseigenschaft des Vierpunktlenkers aus. Der Vierpunktlenker ist somit zur Längsführung, Querführung und Rollstabilisierung ausgeführt.

Ein besonderer Vorzug der Erfindung liegt darin, dass der Vierpunktlenker besonders einfach fertigungstechnisch herzustellen ist. Die beiden Platten können beispielsweise als Halbzeug im Endlosprofil hergestellt werden und anschließend passend abgelängt werden. Ferner kann die Stabilisierungseigenschaft des Vierpunktlenkers durch Auswahl eines geeigneten Aussteifungselements, das auf mindestens einer der Platten aufgebracht wird, gezielt variiert bzw. festgelegt werden.

Gemäß einer vorteilhaften Ausgestaltungsform ist das Aussteifungselement als Hohlrippenstruktur ausgeführt. Eine Hohlrippenstruktur erzeugt eine hohe Steifigkeitswirkung bei gleichzeitig geringem Gewicht. Ferner kann eine derartige Hohlrippenstruktur wiederum als Endlosprofil hergestellt werden, das dann korrespondierend zu den Platten abgelängt wird. Anschließend kann die Hohlrippenstruktur auf einer Platte zur Ausbildung einer Verbundplatte befestigt werden.

Besonders vorteilhaft ist, wenn auf beiden Platten ein entsprechendes Aussteifungselement befestigt ist.

Ferner können die Längslenker als Profilstücke mit einem Vierkantprofil und/oder H-Profil ausgeführt sein. Diese Variante bietet wiederum den Vorteil, dass derartige Profile im Endlosprofil hergestellt werden können, das anschließend passend abgelängt wird.

Die Längslenker können beispielsweise als Hohlbauteil und/oder Massivbauteil ausgeführt sein. Ferner besteht die Möglichkeit, dass die Längslenker aus einem metallischen Werkstoff und/oder einem Verbundwerkstoff, beispielsweise einem karbonfaserverstärkten Kunststoff, gefertigt sind.

Die Grundelemente des Vierpunktlenkers weisen folglich eine Geometrie auf, die besonders einfach herzustellen ist, so dass sich insgesamt ein kostengünstiger Herstellungsprozess ergibt. Dabei müssen die beiden Gelenkarme, die die Längslenker ausbilden, nicht baugleich ausgeführt sein, sondern können aus einer der vorgenannten Varianten ausgewählt sein. Ein besonderer Vorzug der Erfindung liegt ferner darin, dass sich die Stabilisierungseigenschaften des Lenkers einfach festlegen lassen, ohne die Längsführungseigenschaften zu verändern. Die Stabilisierungseigenschaften können beispielsweise dadurch verändert werden, indem die Dicke der Platten oder die Ausgestaltung des Versteifungselements verändert wird, um die erwünschten Stabilisierungseigenschaften einzustellen.

Eine nicht erfindungsgemäßen Realisierung sieht vor, dass die Platten mit den Längslenkern verklebt und/oder verschweißt sind. Ferner kann eine der Platten auf jeweils einer Oberseite und eine der Platten auf jeweils einer Unterseite der Längslenker befestigt sein, so dass die Längslenker sandwichartig zwischen den Platten befestigt sind. Die Anordnung und Geometrie der Komponenten des Vierpunktlenkers ermöglichen eine besonders stabile und gleichzeitig leichte Bauweise des Vierpunktlenkers.

Die erfindungsgemäße Realisierung sieht vor, dass die Platten an den Längslenkern über eine Steckverbindung und/oder eine Klemmverbindung befestigt sind.

Hierbei weisen die Längslenker an ihrer Innenseite zwei sich in Längsrichtung der Längslenker erstreckende Nuten auf, in denen jeweils eine Seitenkante der Platten eingesteckt ist. Dies bietet den Vorteil einer besonders schnellen Montage des Vierpunktlenkers aus den einzelnen Komponenten. Die Platten sind gemäß dieser Ausführungsvariante somit nicht fest mit den beiden Längslenkern verbunden. Ein weiterer Vorteil dieser Ausführungsvariante ist, dass ein Zusammenbau des Vierpunktlenkers aus den Einzelkomponenten auch erst während des Einbaus bzw. des Montageprozesses der Achse vorgenommen werden kann. Hierbei werden dann die entsprechenden Einzelteile des Vierpunktlenkers, d. h. die beiden Längslenker sowie die beiden parallelen Platten mit den darauf befestigten Aussteifungselementen, am Montageband angeliefert und zum Vierpunktlenker zusammengebaut.

Gemäß einer weiteren vorteilhaften Ausgestaltungsform ist die Hohlrippenstruktur so ausgeführt, dass sie Hohlrippen mit einem trapezförmigen Querschnitt aufweist. Die Hohlrippen sind beispielsweise spundwandförmig ausgeführt.

Die Längslenker weisen ferner endseitig jeweils ein Lagerauge auf, in das ein sphärisches oder kardanisches Lager einbringbar und/oder eingepresst ist. Der Vierpunktlenker kann somit in an sich bekannter Weise über zwei Lager an der Vorderseite achsseitig angebunden werden und über zwei Lager an der Rückseite des Vierpunktlenkers am Fahrzeugrahmen bzw. an einem Stützelement des Fahrzeugrahmens angebunden werden.

Die Erfindung betrifft ferner ein Fahrzeug, insbesondere ein Nutzfahrzeug, mit einem Vierpunktlenker wie hierin offenbart.

Weitere Einzelheiten und Vorteile der Erfindung werden im Folgenden unter Bezug auf die beigefügten Zeichnungen beschrieben. Es zeigen:
- Figur 1: eine perspektivische Ansicht eines Vierpunktlenkers gemäß einer nicht erfindungsgemäßen Realisierung;

- Figur 2: einen Querschnitt des Lenkers aus Figur 1;
- Figur 3: den Vierpunktlenker aus Figur 1 im eingebauten Zustand an einer starren Antriebsachse;
- Figur 4: einen Vierpunktlenker gemäß einer Ausgestaltungsform;
- Figur 5: einen Querschnitt des Vierpunktlenkers aus Figur 4; und

- Figur 6: den Vierpunktlenker aus Figur 4 im eingebauten Zustand an einer starren Antriebsachse.

Gleiche oder funktional äquivalente Elemente sind in allen Figuren mit denselben Bezugszeichen bezeichnet.

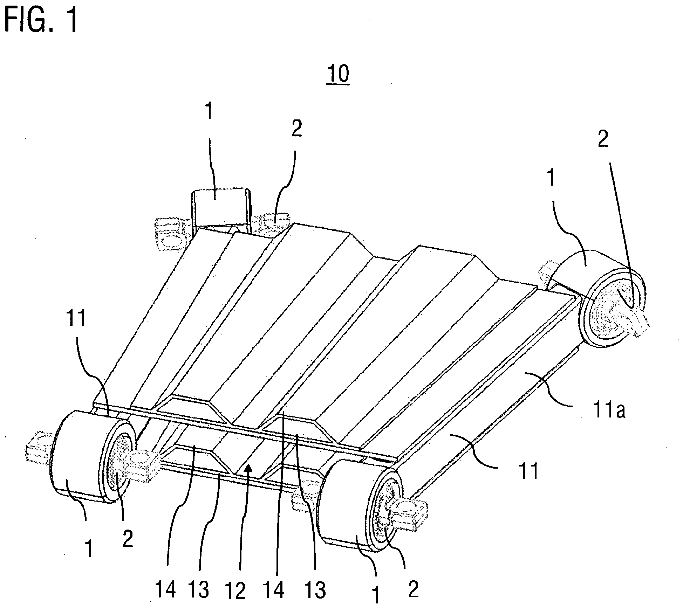

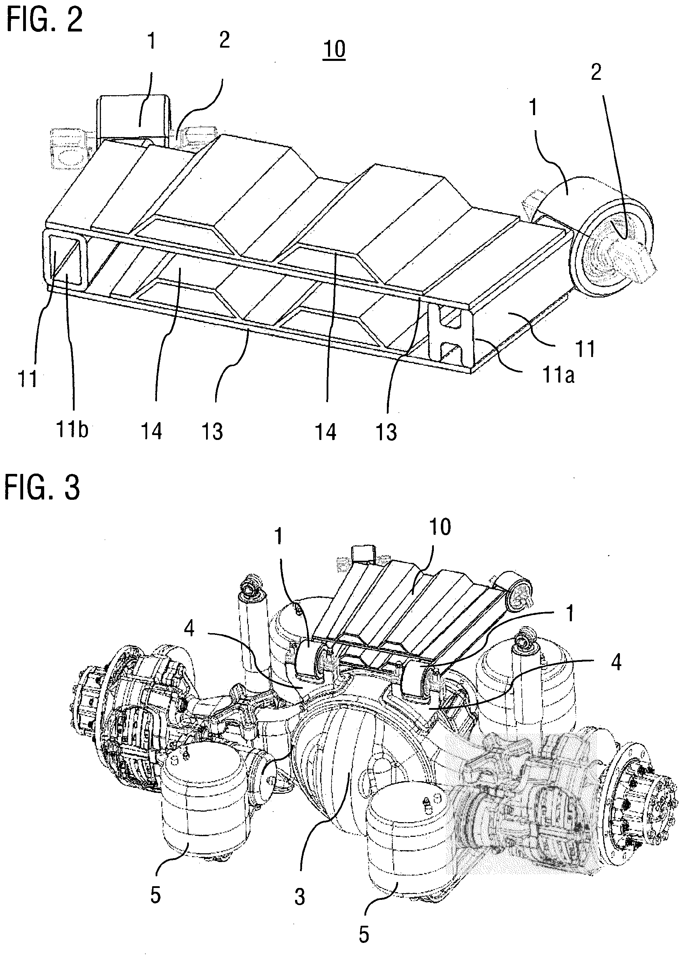

Die Figuren 1 und 2 zeigen eine nicht erfindungsgemäße Realisierung des Vierpunktlenkers. Der Vierpunktlenker 10 umfasst zwei Längslenker 11, die die stabilen Gelenkarme des Vierpunktlenkers ausbilden. Wie in Figur 2 ersichtlich, können die Gelenkarme beispielsweise aus abgelängten Profilstücken mit einem Vierkantprofil 11b oder einem H-Profil 11a gebildet sein.

Die beiden Längslenker 11 weisen endseitig jeweils ein Lagerauge 1 auf, in das ein herkömmliches sphärisches oder kardanisches Lager 2, ummantelt von einem Elastomer, eingepresst ist. Über die Lager 2 erfolgt die achsseitige und rahmenseitige Anbindung des Lenkers.

Die Profilstücke der Lenkerarme 11 können baugleich oder, wie in Figur 2 gezeigt, unterschiedlich ausgeführt sein. Die beiden Lenkerarme werden über einen Zentralbereich 12 miteinander verbunden, der aus zwei parallelen Grundplatten 13 gebildet ist, auf die jeweils eine Hohlrippenstruktur 14 aufgeklebt oder aufgeschweißt ist. Die Rippen der Hohlrippenstruktur 14 weisen bei dem vorliegenden Ausführungsbeispiel einen trapezförmigen Querschnitt auf. Sowohl die Grundplatten 13 als auch die Hohlrippenstruktur 14 werden durch Ablängung eines entsprechenden Endlosprofils erzeugt.

Gemäß der in Figur 1 gezeigten Realisierung wird eine erst Verbundplatte 13, 14, bestehend aus der Grundplatte 13 und der darauf befestigten Hohlrippenstruktur 14, auf die Oberseite der Längslenker 11 geklebt oder geschweißt. Ferner wird eine entsprechende Verbundplatte 13, 14 an die Unterseite der Längslenker geklebt oder geschweißt.

Der vorgeschlagene Längslenker besteht somit aus einfach herzustellenden Bauteilen, die vorzugsweise im Endlosprofil hergestellt, anschließend abgelängt und dann durch einfache Fügetechnologien miteinander verbunden werden.

Es besteht die Möglichkeit, die Einzelbauteile, also sowohl die Längslenker 11, die Grundplatten 13 als auch die Hohlrippenstruktur 14, wahlweise aus einem metallischen Werkstoff, beispielsweise aus einem Aluminiumschmiedewerkstoff oder einem Verbundwerkstoff, beispielsweise einem karbonfaserverstärkten Kunststoff, zu fertigen. Hierbei können die einzelnen Komponenten des Lenkers auch aus unterschiedlichen Materialien gefertigt sein. Die Längslenker 11 des Vierpunktlenkers 11 bilden die Längsführung aus, und der Zentralbereich bildet sowohl die Querführung als auch die Rollstabilisierung aus. Ein weiterer Vorteil der Erfindung ist, dass die gewünschten Rollstabilisierungseigenschaften beispielsweise durch Festlegen der Dicke der Grundplatten 13 und/oder durch Stärke und Ausbildung der Hohlrippenstruktur 14 eingestellt und festgelegt werden können. Der Grundaufbau des Vierpunktlenkers ermöglicht somit, Vierpunktlenker mit unterschiedlichen Stabilisierungseigenschaften auf einfache Weise herzustellen, indem wie vorstehend beschrieben entsprechend angepasste Verbundplatten 13, 14 auf den Längslenkern 11 befestigt werden. In Figur 3 ist der Einbau des Vierpunktlenkers an einer starren Antriebsachse gezeigt, der in an sich üblicher und bekannter Weise ausgeführt werden kann. Die achsseitige Anbindung erfolgt mittels der zwei sphärischen oder kardanischen Gelenke 2, die in den vorderen Lageraugen 1 der Längslenker gelagert sind. Die Gelenke werden an einem Stützelement 4, welches auf der Oberseite der Achsbrücke 3 befestigt ist, angebracht. In Figur 3 sind ferner die auf dem Luftfederträger gelagerten Luftfederbälge mit dem Bezugszeichen 5 bezeichnet, die anderen Komponenten sind nicht beschrieben, jedoch aus dem Stand der Technik bekannt. Über die in Figur 3 gezeigten hinteren zwei Lageraugen mit den darin eingepressten Lagern erfolgt die rahmenseitige Anbindung des Vierpunktlenkers (nicht gezeigt).

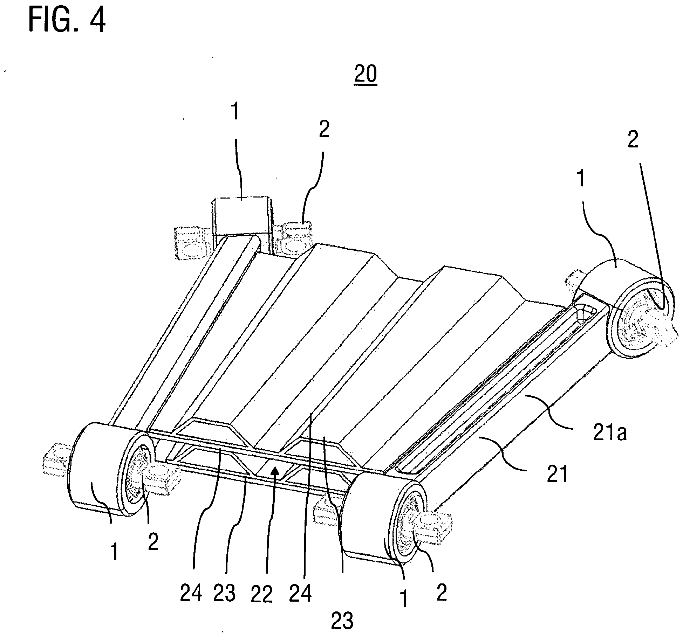

Die Figuren 4 bis 6 zeigen eine Ausgestaltungsform der Erfindung. Der Vierpunktlenker 20 besteht wiederrum aus zwei Längslenkern 21, die beispielsweise ein Vierkantprofil 21b und/oder ein H-Profil 21a aufweisen können. Die beiden Längslenker 21 werden wiederum über zwei Verbundplatten 23, 24 miteinander verbunden, die parallel zueinander zwischen den beiden Längslenkern angeordnet sind. Die beiden Verbundplatten 23, 24 bestehen wiederum aus einer Grundplatte 23, auf der eine Hohlrippenstruktur 24 befestigt ist.

Die Besonderheit der Erfindung liegt darin, dass die beiden Verbundplatten 23, 24 nicht fest mit den Längslenkern verbunden sind, sondern in Nuten 26, die sich seitlich an den Längslenkern in Längsrichtung der Längslenker erstrecken, eingesteckt sind. Dies hat fertigungstechnische Vorteile, wie vorstehend bereits beschrieben wurde.

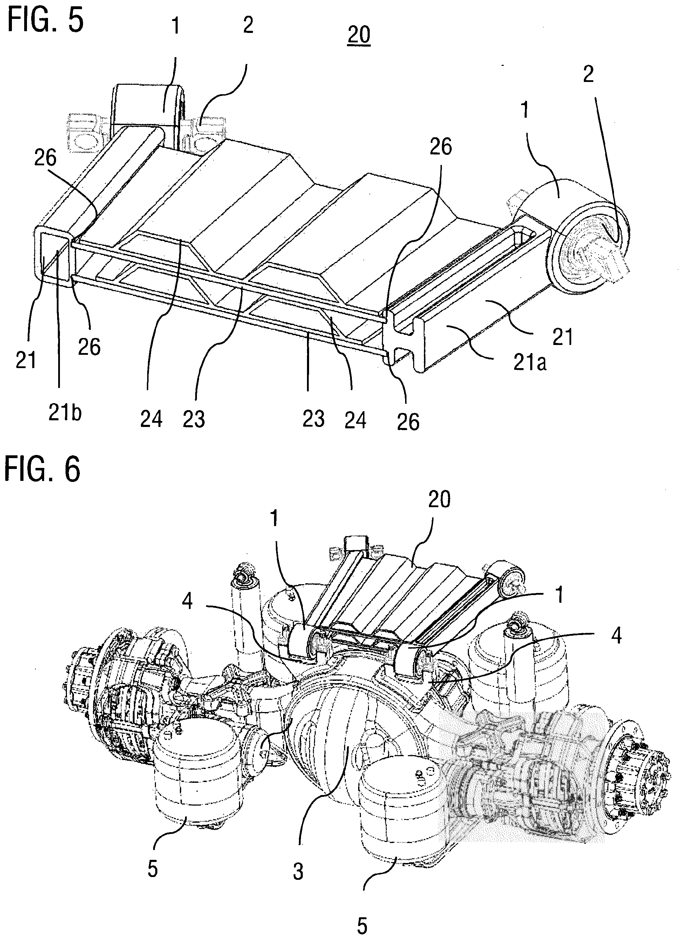

Figur 6 zeigt die achsseitige Anbindung des Vierpunktlenkers 20, die in analoger Weise zu der der nicht erfindungsgemäßen Realisierung erfolgt und daher nicht näher beschrieben ist.

Obwohl die Erfindung unter Bezugnahme auf ein bestimmtes Ausführungsbeispiel beschrieben worden ist, ist es für einen Fachmann ersichtlich, dass verschiedene Änderungen ausgeführt werden können und Äquivalente als Ersatz verwendet werden können, ohne den Bereich der beanspruchten Erfindung zu verlassen. Zusätzlich können viele Modifikationen ausgeführt werden, ohne den zugehörigen Bereich zu verlassen. Folglich soll die Erfindung nicht auf das offenbarte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Lagerauge
- 2: Sphärisches oder kardanisches Lager
- 3: Achskörper, Achsbrücke
- 4: Stützelement
- 5: Luftfederbalg
- 10: Vierpunktlenker
- 11: Längslenker bzw. Gelenkarm
- 11a: H-Profil
- 11b: Vierkant-Profil
- 12: Zentralbereich
- 13: Platte
- 14: Hohlrippenstruktur
- 20: Vierpunktlenker
- 21: Längslenker bzw. Gelenkarm
- 21a: H-Profil
- 21b: Vierkantprofil
- 22: Zentralbereich
- 23: Platte
- 24: Hohlrippenstruktur
- 26: Nut

## Patentansprüche

1. Vierpunktlenker (10; 20) zur Anbindung einer Fahrzeugachse an einem Fahrzeugrahmen eines Fahrzeugs, insbesondere eines Nutzfahrzeugs, aufweisend zwei Längslenker (11; 21), die durch einen Zentralbereich (12; 22) miteinander verbunden sind, wobei der Zentralbereich (12; 22) zwei parallele Platten (13; 23) aufweist, wobei auf mindestens einer Platte (13; 23) ein Aussteifungselement befestigt ist, **dadurch gekennzeichnet,**
**dass** die Platten (23) an den Längslenkern (21) über eine Steckverbindung und/oder Klemmverbindung befestigt sind; und
**dass** die Längslenker (21) an ihrer Innenseite zwei sich in Längsrichtung der Längslenker erstreckende Nuten (26) aufweisen, in denen jeweils eine Seitenkante der Platten (23) eingesteckt ist.

2. Vierpunktlenker (10; 20) nach Anspruch 1, **dadurch gekennzeichnet, dass** das Aussteifungselement als Hohlrippenstruktur (14; 24) ausgeführt ist.

3. Vierpunktlenker (10; 20) nach Anspruch 1 oder 2, **dadurch gekennzeichnet, dass** auf beiden Platten (13; 23) ein Aussteifungselement befestigt ist.

4. Vierpunktlenker (10; 20) nach einem der vorhergehenden Ansprüche, **dadurch gekennzeichnet,**
(a) **dass** die Längslenker (11; 21) als Hohlbauteil und/oder Massivbauteil ausgeführt sind; und/oder
(b) **dass** die Längslenker (11; 21) als Profilstücke mit einem Vierkantprofil (11b; 21b) und/oder H-Profil (11a; 21a) ausgeführt sind; und/oder
(c) **dass** die Längslenker aus einem metallischen Werkstoff und/oder einem Verbundwerkstoff, z. B. einem karbonfaserverstärkten Kunststoff, gefertigt sind.

5. Vierpunktlenker (10; 20) nach einem der Ansprüche 2 bis 4, **dadurch gekennzeichnet, dass** die Hohlrippenstruktur aus Hohlrippen (14; 24) mit einem trapezförmigen Querschnitt gebildet ist.

6. Vierpunktlenker (10; 20) nach einem der vorhergehenden Ansprüche, **dadurch gekennzeichnet, dass** die Längslenker (11; 21) endseitig jeweils ein Lagerauge (1) zur Aufnahme eines sphärischen oder kardanischen Lagers (2) aufweisen.

7. Vierpunktlenker (10; 20) nach einem der vorhergehenden Ansprüche, **dadurch gekennzeichnet, dass** der Vierpunktlenker zur Längsführung, Querführung und Rollstabilisierung ausgeführt ist.

8. Fahrzeug, insbesondere Nutzfahrzeug, mit einem Vierpunktlenker (10; 20) nach einem der Ansprüche 1 bis 7.

## Claims

1. A four-point link (10; 20) for attaching a vehicle axle to a vehicle frame of a vehicle, in particular of a commercial vehicle, having two trailing arms (11; 21) which are connected to one another by way of a central region (12; 22), the central region (12; 22) having two parallel plates (13; 23), a reinforcing element being fastened on at least one plate (13; 23), **characterized in that** the plates (23) are fastened to the trailing arms (21) via a plug-in connection and/or clamped connection; and **in that**, on their inner side, the trailing arms (21) have two grooves (26) which extend in the longitudinal direction of the trailing arms and in which in each case one side edge of the plates (23) is plugged.

2. The four-point link (10; 20) according to Claim 1, **characterized in that** the reinforcing element is configured as a hollow rib structure (14; 24).

3. The four-point link (10; 20) according to Claim 1 or 2, **characterized in that** a reinforcing element is fastened on the two plates (13; 23).

4. The four-point link (10; 20) according to one of the preceding claims, **characterized**
(a) **in that** the trailing arms (11; 21) are configured as a hollow component and/or solid component; and/or
(b) **in that** the trailing arms (11; 21) are configured as profile pieces with a square profile (11b; 21b) and/or an H profile (11a; 21a); and/or
(c) **in that** the trailing arms are manufactured from a metallic material and/or a composite material, for example a carbon fibre-reinforced plastic.

5. The four-point link (10; 20) according to one of Claims 2 to 4, **characterized in that** the hollow rib structure is formed from hollow ribs (14; 24) with a trapezoidal cross section.

6. The four-point link (10; 20) according to one of the preceding claims, **characterized in that** the trailing arms (11; 21) have, on the end side, in each case one bearing socket (1) for receiving a spherical or gimballed bearing (2).

7. The four-point link (10; 20) according to one of the preceding claims, **characterized in that** the four-point link is configured for longitudinal guidance, transverse guidance and roll stabilization.

8. A vehicle, in particular a commercial vehicle, having a four-point link (10; 20) according to one of Claims 1 to 7.

## Revendications

1. Bras oscillant à quatre points (10 ; 20) destiné à relier un essieu de véhicule à un châssis de véhicule, en particulier un véhicule utilitaire, le bras oscillant comprenant deux bras oscillants longitudinaux (11 ; 21) reliés entre eux par une région centrale (12 ; 22), la région centrale (12 ; 22) comportant deux plaques parallèles (13 ; 23), un élément raidisseur étant fixé sur au moins une plaque (13 ; 23), **caractérisé en ce que**
les plaques (23) sont fixées aux bras oscillants longitudinaux (21) par le biais d'une liaison par enfichage et/ou une liaison par serrage ; et
les bras oscillants longitudinaux (21) comportent sur leur côté intérieur deux rainures (26) qui s'étendent dans la direction longitudinale des bras oscillants longitudinaux et dans chacune desquelles est inséré un bord latéral des plaques (23).

2. Bras oscillant à quatre points (10 ; 20) selon la revendication 1, **caractérisé en ce que** l'élément raidisseur est réalisé sous la forme d'une structure à nervures creuses (14 ; 24).

3. Bras oscillant à quatre points (10 ; 20) selon la revendication 1 ou 2, **caractérisé en ce qu'**un élément raidisseur est fixé sur les deux plaques (13 ; 23).

4. Bras oscillant à quatre points (10 ; 20) selon l'une des revendications précédentes, **caractérisé en ce que**
(a) les bras oscillants longitudinaux (11 ; 21) sont conçus comme des composants creux et/ou des composants pleins ; et/ou
(b) les bras oscillants longitudinaux (11 ; 21) sont conçus comme des pièces profilées présentant un profil carré (11b ; 21b) et/ou un profilé en H (11a ; 21a) ; et/ou
(c) les bras oscillants longitudinaux sont fabriqués à partir d'une matière métallique et/ou d'une matière composite, par exemple une matière synthétique renforcée par des fibres de carbone.

5. Bras oscillant à quatre points (10 ; 20) selon l'une des revendications 2 à 4, **caractérisé en ce que** la structure à nervures creuses est formée de nervures creuses (14 ; 24) ayant une section transversale trapézoïdale.

6. Bras oscillant à quatre points (10 ; 20) selon l'une des revendications précédentes, **caractérisé en ce que** les bras oscillants longitudinaux (11 ; 21) comportent chacun du côté extrémité un oeillet de palier (1) destiné à recevoir un palier sphérique ou à cardan (2).

7. Bras oscillant à quatre points (10 ; 20) selon l'une des revendications précédentes, **caractérisé en ce que** le bras oscillant à quatre points est conçu pour le guidage longitudinal, le guidage transversal et la stabilisation de roulis.

8. Véhicule, en particulier véhicule utilitaire, comportant un bras oscillant à quatre points (10 ; 20) selon l'une des revendications 1 à 7.
